# EUROPEAN PATENT APPLICATION

(11) **EP 4 674 992 A1**
(43) Date of publication of application: **07.01.2026**
(21) Application number: 24306133.0
(22) Date of filing: 05.07.2024
(51) Int. Cl.: C22B 3/06, C22B 3/14, C22B 3/44, C22B 7/00, H01M 4/525, H01M 10/54

(54) **PROCESS FOR SEPARATING CHEMICAL ELEMENTS FROM A POLYMETALLIC SAMPLE**

(71) Applicant: Mecaware, 69210 Bully (FR)
(72) Inventor: Monot, Camille, 29260 PLOUIDER (FR); Caillon, Jean, 69003 LYON (FR)
(74) Representative: Cabinet Becker et Associés

(57) **Abstract**

The present application relates to a process for separating chemical elements M1, M2 and M3 contained in a solid sample, such as end of life batteries or black masses, wherein M1 is an alkali metal, M2 is a transition metal and M3 is aluminum.

## Description

### TECHNICAL FIELD

The invention relates to the separation of metallic compounds from polymetallic samples, such as end of life batteries.

### TECHNICAL BACKGROUND

Energy storage has become a global issue and a major challenge. Since the 1980s, the annual world consumption of oil has become greater than the quantities of new deposits discovered. It is therefore necessary to turn to other sources of energy, such as renewable energies, and to develop technologies for the storage of these energies in order to better manage these resources. Efforts to reduce oil consumption are particularly linked to the development of electric vehicles and batteries. While Lithium-ion batteries are now commonly used in computers and mobile phones, there remains some limitations for large-scale applications like electric vehicles. In particular, such applications require high amounts of strategic metals, such as cobalt or rare earth metals, which are expensive. The development of effective and selective recycling processes is therefore crucial in this field.

Most recycling processes, such as hydrometallurgic recycling processes, involve leaching metals from the black mass, which is a type of waste comprising crushed and shredded used battery cells. It contains mixtures of valuable metals including lithium, manganese, cobalt and nickel. Such leaching is classically performed in acidic or basic conditions, and triggers dissolution of metals. Once the metals are in solution, different separation steps are implemented to recover the metals.

However, due to the harshness of the conditions implemented for leaching metals from the black mass, impurities are also dissolved and post-treatment is needed to remove them from valuable metals. For instance, copper and aluminum are present in black mass but are not among the most valuable metals.

It would thus be useful to develop pre-treatments to be implemented before the metal leaching step of black mass, that would allow separating impurities such as copper and aluminum. Such process would among other simplify the separation treatment steps of the valuable metals, as the leached solutions would comprise less impurities and thus less further separation steps would be required to isolate valuable metals.

### SUMMARY OF THE INVENTION

In this respect, the inventors have developed a pre-treatment process of black mass that allows removing impurities such as copper and aluminum before metallic leaching of the black mass. The process of the invention also allows separating lithium before metallic leaching.

Thus, the present invention relates to a process for separating chemical elements M1, M2 and M3 contained in a solid sample, said process comprising the steps of:
a) contacting said solid sample with a first aqueous solution, so as to obtain a first liquid phase enriched in M1, and a first solid residue,
b) separating said first liquid phase and said first solid residue,
c) contacting the first solid residue with ammonium carbonate in a solution, so as to obtain a second liquid phase enriched in M2 and a second solid residue,
d) separating said second liquid phase and said second solid residue,
e) contacting the second solid residue with a base in a solution, so as to obtain a third liquid phase enriched in M3 and a third solid residue,
f) separating said third liquid phase and said third solid residue,
g) contacting the third solid residue with an oxidizing agent in a solution, so as to obtain a fourth liquid phase enriched in M1 and a fourth solid residue,
h) separating said fourth liquid phase enriched in M1 and said fourth solid residue, and/or
i) recovering M1, M2 and M3 respectively from the first and/or fourth liquid phases, the 2^{nd} liquid phase, and the third liquid phase,
wherein
M1 is an alkali metal, such as lithium Li, sodium Na or a mixture thereof,
M2 is a transition metal, such as copper Cu, nickel Ni, cobalt Co or a mixture thereof, and M3 is aluminum.

The separating process according to the invention allows removing M1, M2 and M3, especially copper, aluminum and lithium, from the black mass before the metallic leaching step. It thus affords simplifying the further separating process of valuable metals, by limiting the amount of impurities in the leached solutions. The process also allows drastically limiting the amount of leaching reactant, such as acid or base. The process according to the invention finally allows recovering lithium before metallic leaching, thus limiting contamination of metals with lithium, and increasing the lithium concentration in the recovered lithium, limiting by the way the post-treatment and cost thereof.

In some embodiments, M1 is lithium and M2 is copper.

In some embodiments, the first aqueous solution comprises or consists of water, preferably demineralized water.

In some embodiments, in step c), ammonium carbonate is generated *in situ* in the solution, by contacting CO₂ with ammonia.

In some embodiments, steps c)-d) are implemented at least twice, each further iteration of step c) being implemented with the solid residue of the previous iteration of step d).

In some embodiments said process further comprises, after step d):
e') heating the second liquid phase to a temperature T1, so as to obtain M2 in a solid form, and
f) recovering M2 in a solid form.

In some embodiments, in step e') said temperature T1 is comprised between 60°C and 110°C, preferably between 70°C and 100°C.

In some embodiments, said process further comprises, after step d):
e") electroplating M2 on a substrate, and
f') recovering M2 in a solid form.

In some embodiments, in step e), the base is sodium hydroxide or potassium hydroxide, preferably sodium hydroxide, and is used at a concentration comprised between 0.5 mol/L and 5 mol/L.

In some embodiments, steps e) and f) are implemented at least twice, and the third liquid phase separated in each iteration of step f) is used as the solution of the next iteration of step e), so as to obtain a third liquid phase enriched in M3, preferably saturated in M3.

In some embodiments, the third liquid phase is saturated in M3, and M3 is recovered in a solid form from said third liquid phase, preferably by filtration.

In some embodiments, said process further comprises, after step f):
g') contacting CO₂ with the third liquid phase, so as to obtain M3 in a solid form, and
h') recovering M3 in a solid form, preferably as a carbonate.

In some embodiments, in step g), the oxidizing agent is a persulfate salt, preferably ammonium persulfate.

In some embodiments, step g) is implemented in activation conditions selected from the group consisting of addition of sodium hydroxide, use of a high-shear mixer and use of mechanochemistry.

In some embodiments, in step i), M1 is recovered by contacting the first and/or fourth liquid phases with a carbonate salt, preferably sodium carbonate, or a phosphate salt, preferably phosphate ammonium, and separating M1 in solid form, preferably as a carbonate.

In some embodiments,
- M1 in a solid form is a carbonate, a hydroxide, a phosphate, a sulfate, or a combination thereof, of M1,
- M2 in a solid form is a carbonate, a hydroxide, an oxide, or a combination thereof, of M2, preferably a hydroxycarbonate of M2.
- M3 in a solid form is a carbonate, a hydroxide, an oxide or a combination thereof, of M3.

In some embodiments, the solid sample is originating from a battery or a used battery.

In some embodiments, separating step b), d) and/or f) is a filtration or a centrifugation, preferably a filtration.

In some embodiments, the concentration of ammonium carbonate at step c) is comprised between 0.1 mol/L and 2 mol/L.

In some embodiments, the concentration of the solid sample of step a) and/or of the solid residue of step c), step e) and/or step g) is comprised between 100 g/L and 400 g/L, preferably it is about 200 g/L.

### DETAILED DESCRIPTION OF THE INVENTION

The separating process of the invention is implemented on a solid sample comprising at least chemical elements M1, M2 and M3.

M1 is an alkali metal, such as lithium or sodium, preferably lithium.

M2 is a transition metal, such as copper, cobalt or nickel, preferably copper.

M3 is aluminum.

In the present invention, embodiments disclosed for one alkali metal (such as lithium) and/or for one transition metal (such as copper) may be implemented similarly with other alkali metals (such as Na) and/or for other transition metals (such as cobalt or nickel) respectively. In other words, the invention also encompasses the processes implemented with different alkali metals and/or different transition metals.

The process according to the invention comprises at least one, preferably all, of steps a) to i). In some embodiments, steps are implemented in the a) to i) order. In other embodiments, steps may be implemented in a different order. Steps a) and b), when present, are necessarily implemented before all other steps. Steps c) and d), when present, are necessarily implemented before steps g) and h).

In the present invention, each step is described to be implemented on the solid sample recovered at the previous step, all consecutive steps a) to i) being considered to be implemented. Of course, when not all steps are implemented, each step is performed on the solid sample recovered at the previous implemented step of the process.

In some embodiments, the process according to the invention may comprise additional preliminary or intermediate steps before and/or between steps a) to i). For instance, a preliminary step may be implemented before step a) to remove polyvinylidene fluoride (PVDF). Such preliminary step may be performed by washing, such as washing with dimethylsulfoxide DMSO solvent, or by calcination. In some embodiments, intermediate steps are implemented between two steps of the process in order to separate other elements from the sample. For instance, an intermediate step for separating at least one, preferably all, of Ni, Co and Mn may be implemented before aluminum pre-leaching steps e) and f), preferably between copper pre-leaching steps c) and d) and aluminum pre-leaching steps e) and f).

The solid sample on which the separating process according to the invention is carried out can be any type of solid sample comprising M1, M2 and M3 as defined herein. It can be a solid sample of any origin. For instance, the solid sample may be originating from a battery, wastes from batteries production, effluents from steel industry or dairy industry, red mud, ores, or fly ash. In a particular embodiment, the solid sample is a sample originating from a battery, for instance a nickel-metal hydride or Li-ion battery, or a component thereof (such as a battery cathode). The solid sample may be of any one of the following formulae: La₂Ni₉CoMn, AlₓFe_{y}Ni_{z}MnCoO with x and y being each independently from 0.1 and 10, and z is an integer from 1 to 8 (preferably 8), LiAl_{w}CuFeNiₖMnCoO with w being from 0.1 and 10 and k is an integer from 1 to 8 (preferably 8), or LiAl_{0.1}Ni_{0.8}Co_{0.1}Mn_{0.1}O.

### ✔ Steps a) and b): lithium selective pre-leaching

The first step of the process according to the invention is a selective pre-leaching step of the alkali metal, such as lithium or sodium, preferably lithium, present in the solid sample. When the solid sample is black mass, the presence of available lithium may be due among others to the classical mechanical pre-treatment of black mass. The pre-leaching step of leaching is implemented by suspending and/or dissolving the solid sample in water.

Step a) of the separating process according to the invention thus consists in contacting said solid sample with a first aqueous solution, so as to obtain a first liquid phase enriched in M1, M1 being preferably lithium, and a first solid residue.

The concentration of the solid sample in the first aqueous solution is preferably comprised between 100g/L and 300g/L, preferably between 150g/L and 250g/L, more preferably between 175g/L and 225g/L. In specific embodiments, the concentration of the solid sample in the first aqueous solution is about 200g/L.

Water may be demineralized water.

Contacting step a) may be implemented at any temperature and pressure, and for any duration, allowing the alkali metal, such as lithium or sodium, preferably lithium, to dissolve in water.

In some embodiments, contacting step a) is implemented at ambient pressure.

In some embodiments, contacting step a) is implemented at a temperature higher than room temperature, preferably at a temperature comprised between 50°C and 100°C, more preferably at a temperature comprised between 70°C and 90°C, in particular at a temperature comprised between 75°C and 85°C. In some embodiments, contacting step a) is implemented at a temperature of about 80°C.

In some embodiments, contacting step a) is implemented for a duration comprised between 15 minutes and 10 hours, preferably comprised between 30 minutes and 4 hours, more preferably comprised between 1 hour and 3 hours. In some embodiments, contacting step a) is implemented for a duration of about 2 hours.

Step b) of separating said first liquid phase and said first solid residue may be performed by any liquid-solid separation known in the art. Step b) may be for instance carried out by filtration, centrifugation, or reverse osmosis.

More generally, each recovering and/or separating step of the process of the invention may be independently carried out by filtration, centrifugation, or reverse osmosis.

In some embodiments, step b) is implemented by filtration with a pore size comprised between 0.5 micrometer and 5 micrometers, preferably comprised between 0.5 micrometer and 2 micrometers, more preferably a pore size of about 1 micrometer.

The alkali metal, such as lithium, is recovered in the first liquid phase, preferably as a hydroxide. Further treatment may be implemented on said first liquid phase, in order to obtain the alkali metal M1 in a solid form and preferably separate M1 in a solid form from the corresponding liquid phase.

"Mn in a solid form", n being an integer ranging from 1 to 3, refers to a solid, in particular a solid salt, comprising the chemical element Mn. Preferably, "Mn in a solid form" is a carbonate of Mn, a hydroxide of Mn, an oxide of Mn, or a combination thereof.

Steps a)-b) typically allow recovering the alkali metal, such as lithium or sodium, preferably lithium, with a yield comprised between 4 and 15% in weight relative to the total weight of alkali metal, such as lithium, in the solid sample.

### ✔ Steps c) and d): copper selective pre-leaching

The second step of the process according to the invention is a selective pre-leaching step of the transition metal, such as copper, present in the solid sample or in the first solid residue obtained after lithium pre-leaching.

In preferred embodiments, copper pre-leaching steps c) and d) are implemented after lithium pre-leaching steps a) and b).

Step c) of the separating process according to the invention consists in contacting the first solid residue obtained at step b) with ammonium carbonate in a solution, so as to obtain a second liquid phase enriched in M2 and a second solid residue.

The concentration of the first solid residue in the solution is preferably comprised between 100g/L and 300g/L, preferably between 150g/L and 250g/L, more preferably between 175g/L and 225g/L. In specific embodiments, the concentration of the first solid residue in the first aqueous solution is about 200g/L.

The solution is preferably an aqueous solution.

Contacting step c) may be implemented at any temperature and pressure, and for any duration, allowing the transition metal, such as copper, nickel or cobalt, preferably copper, to dissolve in the solution.

In some embodiments, contacting step c) is implemented at ambient pressure.

In some embodiments, contacting step c) is implemented at a temperature higher than room temperature, preferably at a temperature comprised between 50°C and 100°C, more preferably at a temperature comprised between 70°C and 90°C, in particular at a temperature comprised between 75°C and 85°C. In some embodiments, contacting step c) is implemented at a temperature of about 80°C.

In some embodiments, contacting step c) is implemented for a duration comprised between 15 minutes and 10 hours, preferably comprised between 30 minutes and 4 hours, more preferably comprised between 1 hour and 3 hours. In some embodiments, contacting step c) is implemented for a duration of about 2 hours.

In some embodiments, ammonium carbonate is introduced in the solution as an ammonium carbonate salt, preferably at a concentration comprised between 0.05 mol/L and 3 mol/L, more preferably at a concentration comprised between 0.1 mol/L and 2 mol/L.

In other embodiments, ammonium carbonate is formed *in situ,* for instance by contacting an ammonia solution with carbon dioxide, preferably by contacting gaseous carbon dioxide (for instance by bubbling) with an ammonia solution. The concentration of NH₄OH in the ammonia solution may be comprised between 0.05 mol/L and 3 mol/L, preferably comprised between 0.1 mol/L and 2 mol/L. It is within the knowledge of one skilled in the art to determine the necessary amount of carbon dioxide, especially the necessary amount of gaseous carbon dioxide, to be contacted with the ammonia solution in order to obtain the desired amount and/or concentration of ammonium carbonate. In some embodiments, carbon dioxide, especially gaseous carbon dioxide, is contacted with the ammonia solution in an amount suitable for a solution pH of at least 8, preferably at least 8.5, to be obtained. In an embodiment, carbon dioxide, especially gaseous carbon dioxide, is contacted with the ammonia solution in an amount suitable for a solution pH of about 8.5 to be obtained.

Step d) of separating said second liquid phase and said second solid residue may be performed by any liquid-solid separation known in the art. Step d) may be for instance carried out by filtration, centrifugation, or reverse osmosis.

In some embodiments, step d) is implemented by filtration with a pore size comprised between 0.5 micrometer and 5 micrometers, preferably comprised between 0.5 micrometer and 2 micrometers, more preferably a pore size of about 1 micrometer.

The transition metal, such as copper, nickel or cobalt, preferably copper, is recovered in the second liquid phase, preferably as Cu(NH₃)₄CO₃. Further treatment may be implemented on said second liquid phase, in order to obtain the transition metal M2 in a solid form and preferably separate M2 in a solid form from the corresponding liquid phase. M2 in a solid form is preferably a carbonate or a hydroxide of M2, preferably a carbonate or a hydroxide of copper.

Such further treatment may be for instance evaporation and/or stripping.

In some embodiments, the further treatment comprises contacting the second liquid phase with a gas flow, such as a nitrogen flow or a pressurized air flow, so as to evaporate NH₃ and/or CO₂, and to precipitate M2 in a solid form, preferably copper in a solid form. In other embodiments, the further treatment comprises placing the second liquid phase under reduced pressure, preferably under vacuum, such as at a pressure comprised between 200 mbars and 400 mbars, so as to evaporate NH₃ and/or CO₂, and to precipitate M2 in a solid form, preferably copper in a solid form. Such further evaporation treatment is preferably performed at a temperature higher than room temperature, preferably at a temperature comprised between 50°C and 100°C, more preferably at a temperature comprised between 70°C and 90°C, in particular at a temperature comprised between 75°C and 85°C. In some embodiments, the further evaporation treatment is implemented at a temperature of about 80°C.

In some embodiments, steps c)-d) are implemented at least twice, each further iteration of step c) being implemented with the second solid residue separated at the previous iteration of step d). In some embodiments, steps c)-d) are implemented twice, three times or four times, preferably twice. Implementing steps c)-d) at least twice is particularly useful when the solid sample contains high amounts of transition metal M2, such as copper, cobalt or nickel, preferably copper. High amounts may refer for instance to amounts of at least 2 wt %, at least 5 wt % or at least 10 wt %.

In some embodiments, the amount of transition metal M2, such as copper, in the solid sample is of at least about 2 % in weight relative to the total weight of the solid sample. In such embodiments, steps c) and d) are typically implemented at least twice.

Steps c)-d) typically allow recovering the transition metal, such as copper, with a yield comprised between 90 and 100% in weight relative to the total weight of the transition metal M2 in the solid sample.

In some embodiments, the process further comprises, after step d):
e') heating the second liquid phase to a temperature T1, so as to obtain M2 in a solid form, and
f) recovering M2 in a solid form.

In some embodiments, in step e') said temperature T1 is comprised between 60°C and 110°C, preferably between 70°C and 100°C.

In alternative embodiments, the process further comprises, after step d):
e") electroplating M2 on a substrate, and
f') recovering M2 in a solid form.

Electroplating step e" may for instance be implemented in at least one, preferably all, the following conditions:
∘ electrical potential range : from -0.5V_{Ag/AgCl} to -0.7V_{Ag/AgCl};
∘ room temperature (ie 25°C ±5°C);
∘ room atmosphere ;
∘ stirring, preferably 250rpm stirring ;
∘ Glassy carbon working electrode, preferably with a 7 cm² surface;
∘ platinum counter-electrode ;
∘ Ag /AgCl reference electrode ; and/or
∘ deposition time comprised between 1.5 and 4 hours, preferably about 2 hours.

### ✔ Steps e) and f): aluminum selective pre-leaching

The third step of the process according to the invention is a selective pre-leaching step of aluminum present in the second solid residue obtained after M2 pre-leaching.

Step e) of the separating process according to the invention consists in contacting the second solid residue with a base in a solution, so as to obtain a third liquid phase enriched in M3 and a third solid residue.

The concentration of the second solid residue in the solution is preferably comprised between 100g/L and 400g/L, preferably between 150g/L and 300g/L, more preferably between 175g/L and 225g/L. In specific embodiments, the concentration of the second solid residue in the first aqueous solution is about 200g/L.

The solution is preferably an aqueous solution.

The base may be any suitable base known in the art, preferably a strong base, more preferably sodium hydroxide or potassium hydroxide. In a preferred embodiment, the base is sodium hydroxide.

The concentration of base in the solution is preferably comprised between 0.1 mol/L and 6 mol/L, preferably between 0.5 mol/L and 5 mol/L, preferably about 1 mol/L.

Contacting step e) may be implemented at any temperature and pressure, and for any duration, allowing the aluminum to dissolve in water.

In some embodiments, contacting step e) is implemented at ambient pressure.

In some embodiments, contacting step e) is implemented at a temperature higher than room temperature, preferably at a temperature comprised between 50°C and 100°C, more preferably at a temperature comprised between 70°C and 90°C, in particular at a temperature comprised between 75°C and 85°C. In some embodiments, contacting step e) is implemented at a temperature of about 80°C.

In some embodiments, contacting step e) is implemented for a duration comprised between 15 minutes and 10 hours, preferably comprised between 30 minutes and 4 hours, more preferably comprised between 1 hour and 3 hours. In some embodiments, contacting step e) is implemented for a duration of about 2 hours.

Step f) of separating said first liquid phase and said first solid residue may be performed by any liquid-solid separation known in the art. Step f) may be for instance carried out by filtration, centrifugation, or reverse osmosis.

In some embodiments, step f) is implemented by filtration with a pore size comprised between 0.5 micrometer and 5 micrometers, preferably comprised between 0.5 micrometer and 2 micrometers, more preferably a pore size of about 1 micrometer.

In some embodiments, steps e)-f) are implemented at least twice, preferably 2 to 5 times, and each further iteration of step e) is performed with the third liquid phase of the previous iteration of step f). In some embodiments, steps e)-f) are implemented 2, 3, 4 or 5 consecutive times.

Aluminum is recovered in the third liquid phase, preferably as a NaAlO₂. Further treatment may be implemented on said third liquid phase, in order to obtain M3 in a solid form and preferably separate M3 in a solid form from the corresponding liquid phase.

Further treatment may be implemented for instance by saturation of the third liquid phase, especially when steps e)-f) are repeated, and further separation of M3 in a solid form from the corresponding liquid phase by any suitable method, preferably by filtration. Saturation of the liquid phase may be performed at a temperature higher than room temperature, preferably at a temperature comprised between 50°C and 100°C, more preferably at a temperature comprised between 70°C and 90°C, in particular at a temperature comprised between 75°C and 85°C. In some embodiments, saturation of the liquid phase is implemented at a temperature of about 80°C.

Alternatively, further treatment may be performed by contacting the third liquid phase with carbon dioxide, preferably gaseous carbon dioxide. The amount of carbon dioxide to be added may be determined by one skilled in the art depending among others on the desired pH to obtain. In some embodiments, carbon dioxide is added until a pH of 8 or less, preferably a pH of 7.5 or less, is obtained. In a specific embodiment, carbon dioxide is added until a pH of about 7.5 is obtained. In such embodiment, M3, preferably aluminum, preferably precipitates as a hydroxide.

### ✔ Steps g) and h): lithium selective leaching

The fourth step of the process according to the invention is a selective leaching step of the alkali metal such as lithium or sodium, preferably lithium, that is present in the third solid residue after lithium pre-leaching, copper pre-leaching and aluminum pre-leaching.

Step g) of the separating process according to the invention consists in contacting the third solid residue with an oxidizing agent in a solution, so as to obtain a fourth liquid phase enriched in M1 and a fourth solid residue.

The concentration of the third solid residue in the solution is preferably comprised between 100g/L and 400g/L, preferably between 150g/L and 250g/L, more preferably between 175g/L and 225g/L. In specific embodiments, the concentration of the first solid residue in the first aqueous solution is about 200g/L.

The solution is preferably an aqueous solution. In some embodiments, the aqueous solution comprises the first liquid phase obtained at step b). In some other embodiments, the aqueous solution comprises water.

Contacting step g) may be implemented at any temperature and pressure, and for any duration, allowing the transition metal, such as copper, to dissolve in the solution.

In some embodiments, contacting step g) is implemented at ambient pressure.

In some embodiments, contacting step g) is implemented at a temperature higher than room temperature, preferably at a temperature comprised between 50°C and 100°C, more preferably at a temperature comprised between 70°C and 90°C, in particular at a temperature comprised between 75°C and 85°C. In some embodiments, contacting step g) is implemented at a temperature of about 80°C.

In some embodiments, contacting step g) is implemented for a duration comprised between 15 minutes and 10 hours, preferably comprised between 30 minutes and 4 hours, more preferably comprised between 1 hour and 3 hours. In some embodiments, contacting step g) is implemented for a duration of about 2 hours.

In some embodiments, the oxidizing agent is a persulfate, such as ammonium persulfate.

The amount of oxidizing agent may vary in a wide range, and it may be comprised between 0.5 and 1 equivalent in moles relative to the moles of lithium present in the third solid residue. In specific embodiments, the amount of oxidizing agent is about 0.5 equivalent, about 0.65 equivalent, about 0.75 equivalent or about 1 equivalent in moles relative to the moles of lithium present in the third solid residue.

In some embodiments, the oxidizing agent is contacted with the third liquid residue in presence of an activating agent, such as a base The base may be selected from the group consisting of sodium hydroxide, lithium hydroxide and ammonia, preferably it is sodium hydroxide. The amount of base may vary in a wide range, and it may be comprised between 0.5 and 2.5 equivalent in moles relative to the moles of lithium present in the third solid residue. In specific embodiments, the amount of base is about 0.5 equivalent, about 0.65 equivalent, about 1 equivalent, about 1.5 equivalent or about 2.5 equivalents in moles relative to the moles of lithium present in the third solid residue.

In some embodiments, step g) is implemented by mecanochemistry.

Step h) of separating said fourth liquid phase and said fourth solid residue may be performed by any liquid-solid separation known in the art. Step h) may be for instance carried out by filtration, centrifugation, or reverse osmosis.

In some embodiments, step h) is implemented by filtration with a pore size comprised between 0.5 micrometer and 5 micrometers, preferably comprised between 0.5 micrometer and 2 micrometers, more preferably a pore size of about 1 micrometer.

The alkali metal, such as lithium, is recovered in the fourth liquid phase, preferably as lithium sulfate. Further treatment may be implemented on said fourth liquid phase, in order to obtain the transition metal M1 in a solid form and preferably separate M1 in a solid form from the corresponding liquid phase. M1 in a solid form is preferably a carbonate or a phosphate of M1, preferably a carbonate or a phosphate of lithium.

Such further treatment may be for instance performed by contacting the fourth liquid phase with a carbonate, such as sodium carbonate, or a phosphate, such as ammonium phosphate.

In some embodiments, the further treatment is performed by contacting the fourth liquid phase with a carbonate, such as sodium carbonate, optionally in presence of a base, such as sodium hydroxide. The amount of base to be added may be determined by the desired pH to obtain. In some embodiments, the pH to obtain is about 9, about 10, about 11 or about 12. Addition of the base may trigger precipitating other metals present in said fourth solution, such as nickel.

In some embodiments, the carbonate, such as sodium carbonate, is added in an amount comprised between 1 and 2 equivalents in moles relative to the moles of M1, such as lithium, present in the fourth solid residue. In specific embodiments, the amount of carbonate, such as sodium carbonate, is about 1 equivalent, about 1.5 equivalent, or about 2 equivalents.

In some embodiments, the further treatment is performed by contacting the fourth liquid phase with a phosphate, such as ammonium phosphate, optionally in presence of a base, such as sodium hydroxide. The amount of base to be added may be determined by the desired pH to obtain. In some embodiments, the pH to obtain is about 9, about 10 or about 11. Addition of the base may trigger precipitating other metals present in said fourth solution, such as nickel.

In some embodiments, the phosphate, such as ammonium phosphate, is added in an amount comprised between 1 and 3 equivalents in moles relative to the moles of M1, such as lithium, present in the fourth solid residue. In specific embodiments, the amount of carbonate, such as sodium carbonate, is about 1 equivalent, about 2 equivalents, or about 3 equivalents.

### ✔ Step i): recovery of M1, M2 and M3

The last step of the process according to the invention is the recovery of M1, M2 and M3. The processes to be implemented for recovering M1, M2 and M3 are detailed as "further treatments" for each separating steps b), d), f) and h).

In the present application, the term "about" (or ca.) preceding a value is well-known to the skilled artisan and means that said value may vary to a certain extent depending on the context in which the term is used. If certain uses of this term are not clear to the skilled artisan depending on the context, then "about" means ± 20%, preferably ± 10% of said value.

Unless otherwise indicated, when a range is expressed by means of the expression "comprised between", the limit values are included within the range described.

The invention will also be described in further detail in the following examples, which are not intended to limit the scope of this invention, as defined by the attached claims.

### EXAMPLES

### Example 1. Process according to the invention

### Example 1a. Lithium selective pre-leaching

60 g of black mass were suspended in 300 mL demineralized water in a stirred round-bottom flask. The obtained suspension was heated to 80°C for 2 hours, and filtered with a 1 micrometer tissue filter.

### Example 1b. Copper selective pre-leaching

The solid residue (filtration retentate) obtained at example 1a. was suspended in 300 mL demineralized water in a stirred round-bottom flask. 4.12 g ammonium carbonate (0.14 mol/L) were added. The obtained suspension was heated to 80°C for 2 hours, and filtered with a 1 micrometer tissue filter.

Alternatively, the reaction was performed by suspending the solid residue (filtration retentate) obtained at example 1a. in 300 mL of an aqueous solution of 0.1 mol/L to 2 mol/L NH₄OH. Carbon dioxide was bubbled in the obtained solution until pH 8.5 was reached. The obtained suspension was filtered with a 1 micrometer tissue filter.

The obtained solution (filtration permeate) was evaporated until precipitation of copper in a solid form. Table 1 below presents the purity of copper in the recovered solids with different evaporation conditions.

**Table 1**

| | **Copper Fraction in the solid (%)** | **Copper purity** | **Copper Fraction in the liquid (%)** |
|---|---|---|---|
| **P=Patm** | 105% | 95% | 0% |
| **P=400mbars** | 88,9% | 93,0% | 0,0% |
| **P=200mbars** | 103,7% | 95,2% | 0,8% |

### Example 1c. Aluminum selective pre-leaching

The solid residue (filtration retentate) obtained at example 1b. was suspended in a solution of 30g sodium hydroxide in 300 mL demineralized water (2.5 mol/L) in a stirred round-bottom flask. The obtained suspension was heated to 80°C for 2 hours, and filtered with a 1 micrometer tissue filter.

The reaction was also successfully implemented by amending the following features:
i. Replacing sodium hydroxide with potassium hydroxide,
ii. Replacing 2.5 mol/L sodium hydroxide concentration with 1 mol/L, 1.5 mol/L or 2 mol/L,
iii. Replacing 200 g/L black mass concentration with 100g/L or 400g/L,
iv. Replacing 80°C heating with room temperature stirring.

Carbon dioxide was bubbled in the obtained solution (filtration permeate) until obtaining the desired pH (7.5). The obtained suspension was filtered with a 1 micrometer tissue filter.

Table 2 below presents the purity of aluminum in the recovered solids with different reaction conditions.

**Table 2**

| | **Aluminum solid yield** | **Purity of aluminum solid** | **Liquid Aluminum yield** |
|---|---|---|---|
| **[NaOH]**= **1M** | 92,6% | 100% | 0,0% |
| **[NaOH]= 1,5M** | 73,9% | 98,4% | 0,0% |
| **[NaOH]= 2M** | 78,8% | 99,3% | 0,1% |

### Example 1d. Lithium selective leaching

The solid residue (first filtration retentate) obtained at example 1c. was suspended in 300 mL of the solution (filtration permeate) obtained at example 1a. in a stirred round-bottom flask. 6.56g of sodium hydroxide (0.55 mol/L, 0.5 equivalent/black mass Li) and 37.45g ammonium persulfate (0.55 mol/L, 0.5 equivalent/black mass Li) were added. The obtained suspension was heated to 80°C for 2 hours, and filtered with a 1 micrometer tissue filter.

The reaction was also successfully implemented by amending the following features:
i. Replacing sodium hydroxide with ammonia or lithium hydroxide,
ii. Replacing sodium hydroxide concentration with 0.5 equivalent/Li, 0.65 equivalent/Li, 0.75 equivalent/Li or 1 equivalent/Li,
iii. Replacing ammonium persulfate concentration with 0.5 equivalent/Li, 0.65 equivalent/Li, 1 equivalent/Li, 1.5 equivalent/Li or 2,5 equivalent/Li,
iv. Replacing 200 g/L black mass concentration with 100g/L or 400g/L,
v. Replacing 80°C heating with 50°C heating.

The obtained solution (filtration permeate) was contacted with sodium carbonate (1, 1.5 or 2 equivalent/Li), and the pH was optionally adjusted to 9, 10, 11 or 12 by addition of a base such as sodium hydroxide. Lithium was recovered as lithium carbonate by filtration.

Alternatively, the obtained solution (filtration permeate) was contacted with ammonium phosphate (1, 2 or 3 equivalent/Li), and the pH was optionally adjusted to 9, 10 or 11 by addition of a base such as ammonia. Lithium was recovered as lithium carbonate by filtration.

Table 3 below presents the purity of lithium in the recovered solids with different reaction conditions.

**Table 3**

| Reacting conditions | %Li (Liq) | %Li (sol) | Purity of solid (Li%) |
|---|---|---|---|
| 1eq (NH₄)₃PO₄ /Li | 60% | 40% | 98% |
| 2eq (NH₄)₃PO₄ /Li | 80% | 20% | 98% |
| 3eq (NH₄)₃PO₄ /Li | 40% | 60% | 99% |
| NH₃ up to pH 11 and 2eq (NH₄)₃PO₄ /Li | 8% | 92% | 100% |
| NH₃ up to pH 10 and 2eq (NH₄)₃PO₄ /Li | 16% | 84% | 83% |

### Example 2: Yields of metal recovery from different black masses

Table 4 below presents the yield of metal recovery for different black masses.

**Table 4**

| Black Mass | Lithium pre-leaching(%) | Copper (%) | Aluminum (%) | Lithium leaching (%) |
|---|---|---|---|---|
| JR 1 | - | - | - | 70-75 |
| JR 2 | 8 | 100 | 98 | 64 |
| JR 3 | 4 | 100 | 100 | 50 |
| Scrap Cathode | - | - | 100 | 83 |

Scrap cathode black mass contains 0.3 wt% aluminum and 0 wt% copper.

JR1 black mass contains 0 wt% copper and 0 wt% aluminum.

JR2 black mass contains 2 wt% copper and 3.2 wt% aluminum.

JR3 black mass contains 0.5 wt% copper and 0.3 wt% aluminum.

## Claims

1. A process for separating chemical elements M1, M2 and M3 contained in a solid sample, said process comprising the steps of:
a) contacting said solid sample with a first aqueous solution, so as to obtain a first liquid phase enriched in M1, and a first solid residue,
b) separating said first liquid phase and said first solid residue,
c) contacting the first solid residue with ammonium carbonate in a solution, so as to obtain a second liquid phase enriched in M2 and a second solid residue,
d) separating said second liquid phase and said second solid residue,
e) contacting the second solid residue with a base in a solution, so as to obtain a third liquid phase enriched in M3 and a third solid residue,
f) separating said third liquid phase and said third solid residue,
g) contacting the third solid residue with an oxidizing agent in a solution, so as to obtain a fourth liquid phase enriched in M1 and a fourth solid residue,
h) separating said fourth liquid phase enriched in M1 and said fourth solid residue, and/or
i) recovering M1, M2 and M3 respectively from the first and/or fourth liquid phases, the 2^{nd} liquid phase, and the third liquid phase,
wherein
M1 is an alkali metal, such as sodium, lithium or a mixture thereof, preferably lithium
M2 is a transition metal, such as copper, cobalt, nickel or a mixture thereof, preferably copper, and
M3 is aluminum.

2. The process according to claim 1, wherein, in step c), ammonium carbonate is generated *in situ* in the solution, by contacting CO₂ with ammonia.

3. The process according to claim 1 or claim 2, wherein steps c)-d) are implemented at least twice, each further iteration of step c) being implemented with the solid residue of the previous iteration of step d).

4. The process according to any one of claims 1 to 3, wherein said process further comprises, after step d):
e') heating the second liquid phase to a temperature T1, so as to obtain M2 in a solid form, and
f) recovering M2 in a solid form,
wherein in step e') temperature T1 is preferably comprised between 60°C and 110°C, more preferably between 70°C and 100°C.

5. The process according to any one of claims 1 to 3, wherein said process further comprises, after step d):
e") electroplating M2 on a substrate, and
f') recovering M2 in a solid form.

6. The process according to any one of claims 1 to 5, wherein in step e), the base is sodium hydroxide or potassium hydroxide, preferably sodium hydroxide, and is used at a concentration comprised between 0.5 mol/L and 5 mol/L.

7. The process according to any one of claims 1 to 6, wherein steps e) and f) are implemented at least twice, and the third liquid phase separated in each iteration of step f) is used as the solution of the next iteration of step e), so as to obtain a third liquid phase enriched in M3, preferably saturated in M3.

8. The process according to any one of claims 1 to 7, wherein said process further comprises, after step f):
g') contacting CO₂ with the third liquid phase, so as to obtain M3 in a solid form, and
h') recovering M3 in a solid form, preferably as a carbonate.

9. The process according to any one of claims 1 to 8, wherein, in step g), the oxidizing agent is a persulfate salt, preferably ammonium persulfate.

10. The process according to any one of claims 1 to 8, wherein step g) is implemented in activation conditions selected from the group consisting of addition of sodium hydroxide, use of a high-shear mixer and use of mechanochemistry.

11. The process according to any one of claims 1 to 10, wherein, in step i), M1 is recovered by contacting the first and/or fourth liquid phases with a carbonate salt, preferably sodium carbonate, or a phosphate salt, preferably phosphate ammonium, and separating M1 in solid form, preferably as a carbonate.

12. The process according to any one of claims 1 to 11, wherein:
- M1 in a solid form is a carbonate, a hydroxide, a phosphate, a sulfate, or a combination thereof, of M1,
- M2 in a solid form is a carbonate, a hydroxide, an oxide, or a combination thereof, of M2, preferably a hydroxy carbonate of M2.
- M3 in a solid form is a carbonate, a hydroxide, an oxide or a combination thereof, of M3.

13. The process according to any one of claims 1 to 12, wherein the solid sample is originating from a battery or a used battery.

14. The process according to any one of claims 1 to 13, wherein the concentration of ammonium carbonate at step c) is comprised between 0.1 mol/L and 2 mol/L.

15. The process according to any one of claims 1 to 14, wherein the concentration of the solid sample of step a) and/or of the solid residue of step c), step e) and/or step g) is comprised between 100 g/L and 400 g/L, preferably it is about 200 g/L.
